# FASCICULE DE BREVET EUROPEEN

(11) **EP 3 674 955 B1**
(45) Date de publication et mention de la délivrance du brevet: **28.04.2021**
(21) Numéro de dépôt: 19217815.0
(22) Date de dépôt: 19.12.2019
(51) Int. Cl.: G06F 21/75, G06F 21/77

(54) **CIRCUIT DE PROTECTION**
SCHUTZSCHALTKREIS
PROTECTION CIRCUIT

(30) Priorité: 28.12.2018 FR 1874287
(43) Date de publication de la demande: 01.07.2020
(73) Titulaire: STMicroelectronics (Rousset) SAS, 13790 Rousset (FR); STMicroelectronics (ALPS) SAS, 38000 Grenoble (FR)
(72) Inventeur: MOISUC, Diana, 38120 SAINT EGREVE (FR); LAURENCIN, Christophe, 13124 PEYPIN (FR)
(74) Mandataire: Cabinet Beaumont

(56) Documents cités:
- US-A1- 2012 124 680
- US-A1- 2013 312 122

## Description

### Domaine technique

La présente description concerne de façon générale les circuits et systèmes électroniques et, plus particulièrement, une contremesure contre des attaques par injections de fautes.

### Technique antérieure

Certains circuits électroniques manipulent des données ou exécutent des algorithmes ou programmes dont on souhaite réserver l'accès à des utilisateurs ou circuits autorisés. On fait alors généralement référence à des données secrètes ou algorithmes de chiffrement utilisant des clés dites secrètes.

Pour percer les secrets de tels circuits et, par exemple, découvrir les quantités ou données secrètes manipulées, une catégorie d'attaques consiste à injecter des fautes permanentes ou temporaires dans le circuit afin de pouvoir analyser sa réaction. Il s'agit, par exemple, d'analyses par canaux cachés analysant la consommation du circuit (analyse de la consommation de type SPA - Simple Power Analysis ou DPA - Differential Power Analysis), son rayonnement électromagnétique, etc. Il peut s'agir également d'analyses de la réponse du circuit (de ses entrées-sorties), etc.

L'injection de fautes s'effectue de plus en plus souvent sans utiliser les entrées-sorties du circuit mais par modification d'états internes, par exemple à l'aide d'un laser (attaques FIB - Focused Ion Beam), par perturbation électrique ou électromagnétique, ou de façon plus intrusive en forçant certains états internes en coupant ou détournant des chemins électriques de façon physique. Certaines de ces attaques font appel à des traitements préalables d'élimination de couches (attaques face arrière) ou de réalisation de fenêtres pour accéder aux couches actives.

Dans des circuits électroniques, par exemple des microcontrôleurs, dits sécurisés, le circuit est équipé de mécanismes pour contrer d'éventuelles attaques ou, à tout le moins en limiter les effets. En particulier, l'objectif des contremesures est d'empêcher que le pirate ne parvienne à extraire les données ou quantités secrètes du circuit protégé.

Une catégorie de contremesures à laquelle s'applique plus particulièrement les modes de réalisation décrits concerne les contremesures qui réinitialisent (reset) le circuit lorsqu'une tentative d'attaque est détectée. Une telle réinitialisation évite que l'attaquant ne puisse extraire des informations sensibles. Toutefois, une difficulté est qu'en rejouant l'attaque plusieurs fois de façon localisée, l'attaquant est susceptible d'identifier la zone du microcontrôleur où se trouvent les circuits provoquant la réinitialisation et/ou les conducteurs véhiculant les signaux de réinitialisation. Une fois cette identification effectuée, l'attaquant peut être en mesure de déjouer la réinitialisation et le microcontrôleur n'est alors plus sécurisé.

Le document US 2013/0312122 décrit un détecteur d'anomalie pour module sécurisé.

Le document US 2012/0124680 décrit un procédé pour détecter des anomalies dans un circuit cryptographique protégé par une logique différentielle, et un circuit pour mettre en œuvre ce procédé.

### Résumé de l'invention

Il existe un besoin d'amélioration des contremesures contres des attaques par injection de fautes.

Un mode de réalisation prévoit un circuit de protection contre des attaques par injection de fautes palliant tout ou partie des inconvénients des solutions connues.

Un mode de réalisation prévoit un circuit électronique comportant :
plusieurs nœuds de protection comportant chacun :
au moins une fonction de traitement d'informations représentatives d'une détection d'une perturbation, provenant d'au moins une fonction de détection ; et
au moins une fonction de mise en œuvre d'une contremesure commandée par la fonction de traitement en réponse de détection d'une perturbation, dans lequel chaque fonction de traitement (55) reçoit les informations provenant de tous les fonctions de détection (53) du circuit.

Selon un mode de réalisation, chaque nœud comporte au moins une fonction de détection d'une perturbation.

Selon un mode de réalisation, les fonctions de traitement des différents nœuds communiquent entre-elles.

Selon un mode de réalisation, les fonctions de traitement sont reliées entre-elles par un bus.

Selon un mode de réalisation, les fonctions de traitement sont reliées deux à deux par des liaisons dédiées.

Un mode de réalisation prévoit un microcontrôleur comportant un circuit tel que décrit.

Selon un mode de réalisation, le microcontrôleur comporte en outre un circuit de commande d'une réinitialisation du microcontrôleur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de circuit électronique du type auquel s'applique les modes de réalisation décrits ;
la figure 2 illustre, de façon très schématique et sous forme de chronogramme, un exemple de signature électromagnétique usuelle d'un microcontrôleur sécurisé lors de la détection d'une attaque potentielle ;
la figure 3 représente, de façon très schématique et sous forme de blocs, un mode de réalisation de circuit électronique équipé d'un mode de réalisation d'une architecture de protection ;
la figure 4 représente, de façon très schématique et sous forme de blocs, un mode de réalisation d'un nœud de protection ;
la figure 5 représente, de façon très schématique et sous forme de blocs, un exemple d'architecture de sécurisation d'un microcontrôleur ; et
la figure 6 représente, de façon très schématique et sous forme de blocs, un autre exemple d'architecture de sécurisation d'un microcontrôleur.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications ainsi que les fonctions mises en œuvre par le circuit électronique protégé n'ont pas été détaillées, les mécanismes de protection décrits étant compatibles avec les applications et fonctions des circuits usuels. De plus les détecteurs d'intrusions ou d'attaques n'ont pas été détaillés, les modes de réalisation décrits intervenant sur les contremesures et étant compatible avec tout détecteur usuel.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

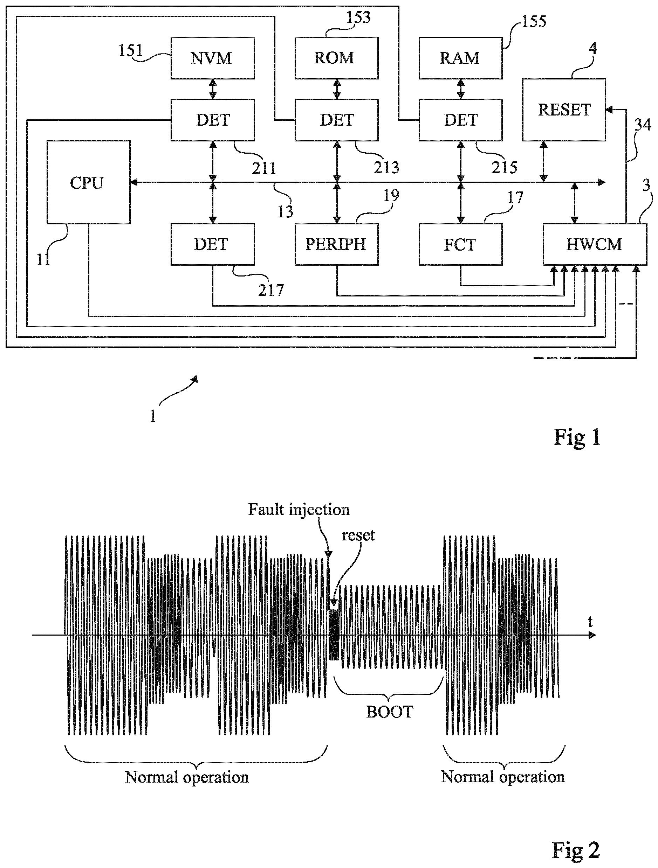

La figure 1 représente un exemple de circuit électronique du type auquel s'applique les modes de réalisation décrits.

Le circuit de la figure 1 est par exemple un microcontrôleur sécurisé 1.

Un tel microcontrôleur est basé sur un microprocesseur ou unité centrale 11 (CPU), susceptible de communiquer, par l'intermédiaire d'un ou plusieurs bus 13, avec différents autres circuits avec lesquels il est intégré.

Typiquement, le microcontrôleur 1 intègre des circuits mémoires, par exemple une ou plusieurs mémoires non volatiles réinscriptibles 151 (NVM), une ou plusieurs mémoires à lecture seulement 153 (ROM), une ou plusieurs mémoires volatiles 155 (RAM). Le microcontrôleur peut également intégrer diverses fonctions matérielles ou circuits, symbolisés par un bloc 17 (FCT), par exemple une fonction cryptographique, des fonctions de calcul spécifiques, des interfaces d'entrée-sortie filaires et/ou sans fil, etc.

Selon l'application, le microcontrôleur 1 communique également, par le ou les bus 13, avec un ou plusieurs périphériques internes ou externes, symbolisés par un bloc 19 (PERIPH), par exemple, des détecteurs de caractéristiques environnementales (pression, température, etc.) ou autres.

Dans une application à un microcontrôleur sécurisé, celui-ci doit s'assurer qu'il soit toujours dans un état sécurisé, dans lequel des secrets contenus dans le système ne sont pas divulgués. Pour ce faire, le circuit ou microcontrôleur 1 comporte divers détecteurs (DET) matériels et/ou logiciels de tentatives d'attaques de son contenu ou de détection d'un dysfonctionnement accidentel ou volontaire. De tels détecteurs peuvent prendre divers aspects. Il s'agit, par exemple, de détecteurs matériels capables de détecter une perturbation électrique ou électromagnétique après que le circuit ait subi une modification structurelle, telle que l'élimination de couches présentes en face arrière. Il peut également s'agir de détecteurs matériels d'attaques laser. Il peut encore s'agir de détecteurs logiciels capables de détecter un dysfonctionnement opérationnel de certaines fonctions du circuit. Les détecteurs peuvent ou non être associés à des fonctions spécifiques du microcontrôleur. En figure 1, on a illustré le cas où des détecteurs 211, 213 et 215 sont intercalés entre les mémoires 151, 153, 155 et le bus 13 et sont alors dédiés à la mémoire correspondante, et le cas d'un détecteur 217 indépendant d'une fonction particulière. Par ailleurs, les fonctions 17 et/ou les périphériques 19 du circuit 1 peuvent également être associés à des détecteurs (non représentés).

Tous les détecteurs de perturbations ayant pour objet de détecter une potentialité de faute sont électriquement reliés (de manière filaire) à un bloc 3 (HWCM) matériel et/ou logiciel de réaction ou de mise en place d'une contremesure à l'attaque suspectée. Le rôle du bloc 3 est d'agir sur plusieurs fonctions du circuit 1 ainsi que de déclencher une réinitialisation du circuit 1. En figure 1, on a symbolisé un circuit de réinitialisation 4 (RESET) distinct des autres circuits et fonctions.

Le rôle de la réinitialisation est, en présence d'une alarme indicatrice d'un dysfonctionnement, qu'il soit accidentel ou volontaire (attaque), de s'assurer que le circuit 1 reste dans un état sécurisé. La réinitialisation répond à cet objectif dans la mesure où toutes les fonctions redémarrent dans leur état sécurisé d'origine. Cette réinitialisation évite que des zones sensibles du circuit ne deviennent accessibles par suite d'une attaque.

Toutefois, la réaction du système qui se traduit par une réinitialisation constitue une indication observable par l'attaquant, lui indiquant que son attaque a modifié le comportement du circuit.

En particulier, toute réaction du circuit, par exemple signature de consommation, de rayonnement, etc. qui est différente de ce qui se produit en fonctionnement normal renseigne l'attaquant. Si un attaquant identifie une réaction du circuit, cela le renseigne sur le fait que son attaque a provoqué un comportement atypique du circuit. Il peut alors effectuer une autre attaque consistant à inhiber la réaction du système. Par exemple, en identifiant la zone du circuit provoquant la réinitialisation, il peut intervenir pour en empêcher le fonctionnement. Il lui suffit ensuite de rejouer sa première attaque, le circuit n'étant plus dans un état sûr (« safe » ou « secure »). La réinitialisation d'un microcontrôleur est en outre particulièrement identifiable sur une signature en consommation ou électromagnétique.

Plus précisément, si l'attaquant parvient à localiser le conducteur physique 34 reliant le circuit 3 à l'entité de réinitialisation 4, il lui suffit de couper ou de détourner ce conducteur pour pouvoir rejouer sa première attaque et qu'elle réussisse.

La figure 2 illustre, de façon très schématique et sous forme de chronogramme, un exemple de signature électromagnétique usuelle d'un microcontrôleur sécurisé lors de la détection d'une attaque potentielle.

On suppose un fonctionnement initial normal du microcontrôleur (Normal opération).

Lors d'une injection de faute (Fault injection), ou plus généralement d'une action ou d'un fonctionnement détecté comme anormal par l'un des détecteur DET (figure 1), le circuit 3 provoque habituellement immédiatement une réinitialisation (reset) du microcontrôleur. Ce dernier est alors redémarré (BOOT), puis le microcontrôleur reprend son fonctionnement normal (Normal operation). Le redémarrage BOOT du microcontrôleur est aisément identifiable d'autant plus qu'il est généralement de durée fixe.

Selon les modes de réalisation décrits, on prévoit une nouvelle organisation des contremesures au sein du circuit électronique. En d'autres termes, on prévoit d'intégrer dans le circuit électronique à protéger, une architecture de protection particulière.

Selon un mode de réalisation, on prévoit au moins deux circuits de protection, ou nœuds de protection, équipés chacun d'un ou plusieurs détecteurs de perturbations. Chaque circuit ou nœud de protection comporte un circuit d'interprétation de la détection et de communication avec les autres nœuds. Chaque nœud de protection est en outre associé à une ou plusieurs fonctions de réaction ou contremesures qui lui sont dédiées. Ainsi, chaque nœud de protection est capable de mettre en œuvre, à la fois une réaction, dite locale, de sécurisation d'une fonction spécifique du circuit électronique protégé, et une communication avec l'autre ou les autres circuits de protection. Cette communication s'effectue, soit par le bus général 13 du microcontrôleur, soit par un bus spécifique, soit par des conducteurs reliant les différents nœuds de protection deux à deux dans un réseau maillé. Le fait d'informer les autres circuits de protection d'un dysfonctionnement apparenté à une tentative d'attaque permet à ces autres circuits de mettre eux-mêmes en œuvre la réaction locale de sécurisation de la fonction spécifique à laquelle ils sont respectivement associés.

Ainsi, la réaction ou contremesure de chaque circuit de protection peut être déclenchée par suite d'une détection au niveau du nœud de protection concerné ou par suite d'une détection par n'importe lequel des nœuds de protection.

La réaction ou contremesure locale peut prendre diverses formes, en elles-mêmes usuelles, selon la fonction à laquelle est associée le circuit de protection. Il s'agit, par exemple, d'un blocage d'une écriture ou des accès dans une mémoire, d'un effacement de la mémoire volatile, d'un blocage des sorties d'une interface d'entrée-sortie, d'un effacement de clés cryptographique d'un circuit de chiffrement, etc.

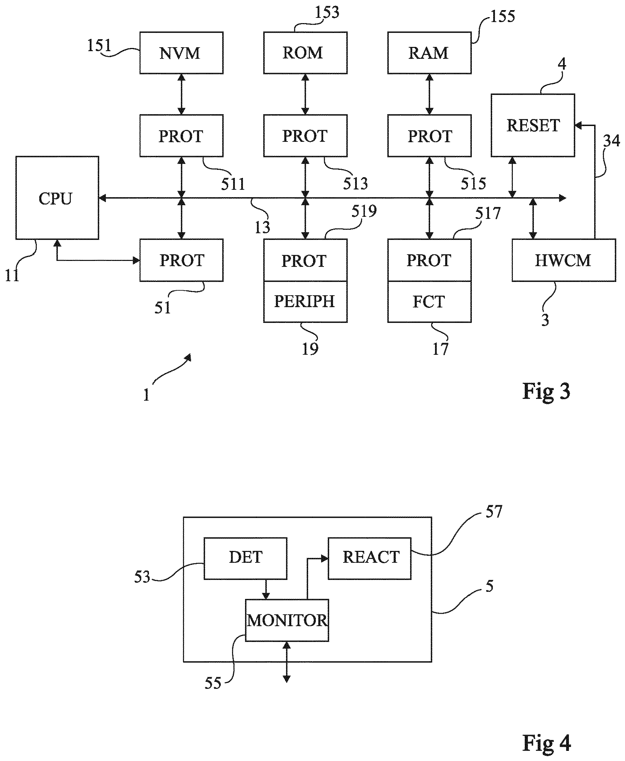

La figure 3 représente, de façon très schématique et sous forme de blocs, un mode de réalisation de circuit électronique équipé d'un mode de réalisation d'une architecture de protection.

Le circuit de la figure 3 est par exemple un microcontrôleur sécurisé 1.

Comme précédemment, un tel microcontrôleur 1 est basé sur un microprocesseur ou unité centrale 11 (CPU), susceptible de communiquer, par l'intermédiaire d'un ou plusieurs bus 13, avec différents autres circuits avec lesquels il est intégré. Pour simplifier, un bus 13 a été représenté en figure 3, mais il s'agit le plus souvent de plusieurs bus, respectivement d'adresses, de données et de commandes. En outre, certains composants du microcontrôleur peuvent également communiquer directement entre eux.

Typiquement, le microcontrôleur 1 intègre des circuits mémoires, par exemple une ou plusieurs mémoires non volatiles réinscriptibles 151 (NVM), une ou plusieurs mémoires à lecture seulement 153 (ROM), une ou plusieurs mémoires volatiles 155 (RAM). Le microcontrôleur peut également intégrer diverses fonctions matérielles ou circuits, symbolisés par un bloc 17 (FCT), par exemple une fonction cryptographique, des fonctions de calcul spécifiques, des interfaces d'entrée-sortie filaires et/ou sans fil, etc.

Selon l'application, le microcontrôleur 1 communique également, par le ou les bus 13, avec un ou plusieurs périphériques internes ou externes, symbolisés par un bloc 19 (PERIPH), par exemple, des détecteurs de caractéristiques environnementales (pression, température, etc.) ou autres.

Le microcontrôleur de la figure 3 est en outre équipé d'une architecture de protection particulière.

Dans l'exemple représenté en figure 3, les mémoires 151, 153, 155 sont chacune associées à un circuit ou nœud de protection, respectivement 511, 513 et 515. Par ailleurs, on suppose que les fonctions 17 et périphériques 19 sont également associés à des nœuds de protection 517 et 519 et que le circuit intègre en outre au moins un nœud de protection 51 interagissant avec l'unité centrale 11 (par exemple pour réinitialiser son horloge).

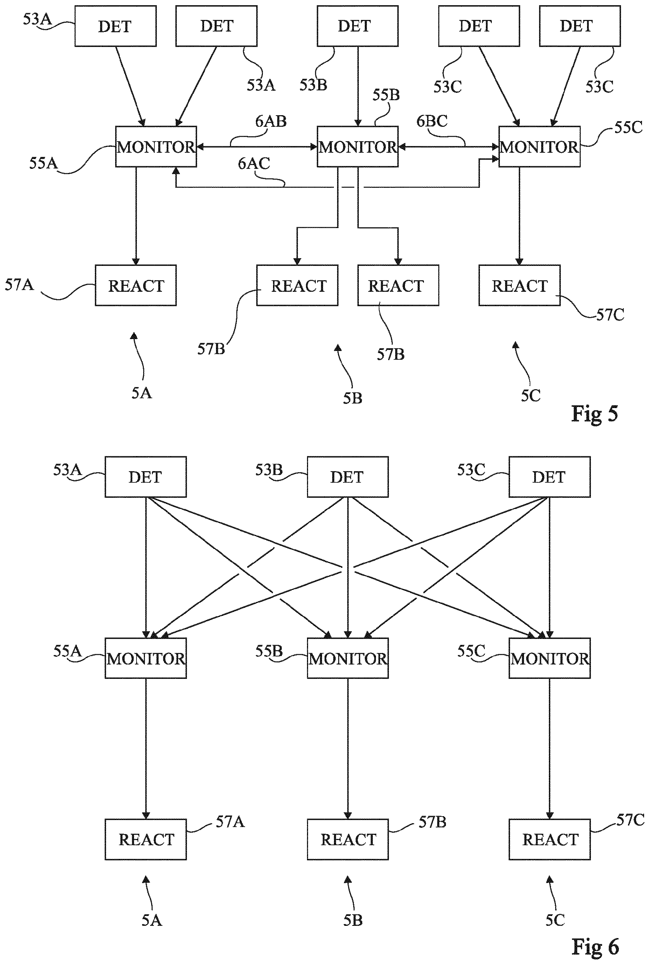

Dans l'exemple de la figure 3, on suppose que les nœuds de protection communiquent entre eux via le bus 13, mais d'autres exemples seront illustrés en relation avec les figures 5 et 6.

La figure 4 représente, de façon très schématique et sous forme de blocs, un mode de réalisation d'un nœud de protection 5, du type des nœuds 511, 513, 515, 517, 519 et 51 de la figure 3.

Chaque nœud de protection 5 comporte ou est associé à au moins un détecteur 53 (DET) matériel et/ou logiciel de détection d'un dysfonctionnement accidentel ou volontaire. La nature du détecteur n'est en soi pas modifiée par les modes de réalisation prévus. Les modes de réalisation décrits ne modifient en effet pas les méthodes ou façons usuelles de détecter une éventuelle attaque ou perturbation, et s'appliquent quels que soient les mécanismes de détections utilisés (photoniques, électriques, magnétique, etc. ; localisés ou répartis dans le circuit, matériels ou logiciels, etc.).

Chaque nœud de protection 5 comporte ou est associé à un circuit (ou fonction) de traitement ou de surveillance 55 (MONITOR) recevant des informations représentatives d'un dysfonctionnement détecté au niveau du microcontrôleur. Par exemple, chaque circuit 55 reçoit et traite les signaux du ou des détecteurs 53 du nœud auquel il est associé. Le rôle du circuit 55 est, en cas de dysfonctionnement détecté, de provoquer une réaction locale (bloc 57, REACT) associée au nœud concerné et, de préférence, d'informer les autres nœuds (leur circuit de surveillance) de la tentative d'attaque afin que ces derniers mettent également en œuvre leurs contremesures locales respectives. Chaque circuit 55 est alors en outre capable de recevoir une information provenant d'autres circuits 55 pour provoquer une action de son propre circuit de réaction 57.

On notera que la mise en œuvre de l'architecture prévue est compatible avec la mise en œuvre d'une protection globale telle qu'illustrée en figure 1. Ainsi, le microcontrôleur 1 de la figure 3 comporte également un bloc 3 (HWCM) matériel et/ou logiciel recevant des informations de tous les détecteurs 53 (tous les nœud 5). Le bloc 3 est capable de déclencher, via un circuit de réinitialisation 4 (RESET), une réinitialisation du circuit 1. En figure 3, on a symbolisé un circuit de réinitialisation 4 (RESET) distinct des autres circuits et fonctions. La fonction de réinitialisation peut, en variante, se trouver au niveau de l'unité centrale 11. La communication entre les différents nœuds 55 et le bloc 3 peut passer par des liaisons filaires dédiées ou par le bus 13.

Un avantage de l'architecture décrite est que, même si un attaquant parvient à localiser la liaison électrique 34 entre le bloc 3 et le circuit de réinitialisation 4 et à interrompre cette liaison, le microcontrôleur reste sécurisé. En effet, cela empêchera une réinitialisation globale du microcontrôleur par ce bloc 3 à la prochaine attaque, mais n'empêchera pas la mises en œuvre des autres contremesures de sécurisation associées aux différents nœuds. Les modes de réalisation décrits sont en outre compatibles avec toute contremesure usuelle.

Dans le cas où le bus 13, ou un bus spécifique partagé par les différents nœuds, est utilisé pour faire communiquer leurs circuits 55 respectifs, on peut prévoir des cycles de communication périodiques permettant aux nœuds de détecter une éventuelle rupture du bus et mettre ainsi en œuvre leurs contremesures respectives. En pratique, dans un cycle de communication, chaque nœud prend successivement le bus pour envoyer son état à tous les autres nœuds.

En variante, la valeur à véhiculer sur le bus pour indiquer une absence de perturbation est programmable et le programme doit rafraichir cette valeur périodiquement, faute de quoi, les nœuds interprètent une erreur.

La figure 5 représente, de façon très schématique et sous forme de blocs, un exemple d'architecture de sécurisation d'un microcontrôleur reprenant les principes illustrés en figures 3 et 4.

Pour simplifier, seuls les nœuds de protection et leurs liaisons ont été représentés. Les interactions entre le circuit de contremesure de chaque nœud et la fonction du microcontrôleur à laquelle il est associé n'ont pas été illustrées.

Dans l'exemple de la figure 5, on suppose que l'architecture de protection comporte trois nœuds 5A, 5B et 5C, dont les circuits de surveillance respectifs 55A, 55B et 55C reçoivent des signaux de détecteurs 53A, 53B et 53C et commandent des réactions locales 57A, 57B et 57C. Selon le mode de réalisation de la figure 5, chaque circuit de surveillance 55 communique avec les circuits de surveillance des autres nœuds par des liaisons dédiées 6AB, 6BC et 6AC, deux à deux.

L'exemple de la figure 5 illustre également le cas de nœuds comportant plusieurs détecteurs (les nœuds 5A et 5C comportent chacun deux détecteurs, respectivement 53A et 53C) et comportant plusieurs blocs de réaction (le nœud 5B comporte deux circuits 57B de contremesure).

La figure 6 représente, de façon très schématique et sous forme de blocs, un autre exemple d'architecture de sécurisation d'un microcontrôleur reprenant les principes illustrés en figures 3 et 4.

Comme dans l'exemple de la figure 5, on suppose le cas de trois nœuds 5A, 5B et 5C comportant chacun un détecteur 53A, 53B, 53C, un circuit de surveillance 55A, 55B, 55C et un circuit de réaction 57A, 57B, 57C.

Toutefois, dans le mode de réalisation de la figure 6, les circuits de surveillance 55 ne communiquent pas entre eux mais reçoivent chacun le résultat de détection des différents détecteurs 53 du microcontrôleur. Chaque circuit 55 agit sur le circuit de réaction de son nœud.

Ainsi, dans ce mode de réalisation, tous les résultats de détection sont envoyés à tous les nœuds de protection (et leurs circuits de surveillance respectifs).

Un avantage des modes de réalisation décrits est que la réaction du circuit protégé est plus difficile à détecter par un attaquant.

Un autre avantage est que le placement du circuit dans un état de protection (par suite de la détection d'une attaque) engendre des réactions locales dont la commande n'est pas centralisée. Il est alors beaucoup plus difficile pour un attaquant de contrer la réaction du circuit. En particulier, il faudrait que l'attaquant détecte et coupe physiquement toutes les liaisons électriques de l'architecture de protection pour pouvoir rejouer son attaque sans que le circuit ne se mette dans un état sécurisé.

On notera que les éléments (détecteur(s) 53, circuit de surveillance 55, et fonction(s) de réaction 57) d'un même nœud 5 peuvent être disséminés dans le circuit intégré. Ils ne sont pas nécessairement géographiquement voisins.

Bien qu'une réalisation logicielle des fonctions de surveillance 55 au niveau de certain nœuds 5 ne soit pas exclue, les circuits de surveillance 55 sont de préférence réalisés sous forme matérielle. Les fonctions de détection ou détecteurs 53 et les contremesures 57 peuvent quant à elles prendre de formes logicielle et/ou matérielle selon les nœuds.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art La portée de l'invention est définie par les revendications annexées.

Enfin, la mise en oeuvre pratique des modes de réalisation et variantes décrits est à la portée de l'homme du métier à partir des indications fonctionnelles données ci-dessus, en particulier, pour ce qui est du choix des réactions (contremesures) exécutées par le microcontrôleur par suite de la détection d'une attaque.

## Revendications

1. Circuit électronique comportant :
plusieurs nœuds (5) de protection comportant chacun :
au moins une fonction (55) de traitement d'informations représentatives d'une détection d'une perturbation, provenant d'au moins une fonction de détection (53) ; et
au moins une fonction (57) de mise en œuvre d'une contremesure commandée par la fonction de traitement en réponse de détection d'une perturbation, **caractérisé en ce que** chaque fonction de traitement (55) reçoit les informations provenant de tous les fonctions de détection (53) du circuit.

2. Circuit selon la revendication 1, dans lequel chaque nœud (5) comporte au moins une fonction (53) de détection d'une perturbation.

3. Circuit selon la revendication 1 ou 2, dans lequel les fonctions de traitement (55) des différents nœuds (5) communiquent entre-elles.

4. Circuit selon la revendication 3, dans lequel les fonctions de traitement (55) sont reliées entre-elles par un bus.

5. Circuit selon la revendication 3 ou 4, dans lequel les fonctions de traitement (55) sont reliées deux à deux par des liaisons dédiées.

6. Microcontrôleur (1), comportant un circuit selon l'une quelconque des revendications 1 à 5.

7. Microcontrôleur selon la revendication 6, comportant en outre un circuit (3) de commande d'une réinitialisation du microcontrôleur.

## Patentansprüche

1. Eine elektronische Schaltung, aufweisend.
eine Vielzahl von Schutzknoten (5), die jeweils Folgendes aufweisen:
wenigstens eine Verarbeitungsfunktion (55) zum Verarbeiten von Informationen, die repräsentativ sind für eine Detektion einer Störung, die von wenigstens einer Detektierfunktion (53) abgeleitet ist; und
wenigstens eine Funktion (57) zum Implementieren einer durch die Verarbeitungsfunktion gesteuerten Gegenmaßnahme als Reaktion auf eine Störungsdetektion,
**dadurch gekennzeichnet, dass** jede Verarbeitungsfunktion (55) Informationen von allen Detektierfunktionen der Schaltung empfängt.

2. Schaltung nach Anspruch 1, wobei jeder Knoten (5) wenigstens eine Funktion (53) zur Detektion einer Störung aufweist.

3. Schaltung nach Anspruch 1 oder 2, wobei die Verarbeitungsfunktionen (55) der verschiedenen Knoten (5) untereinander kommunizieren.

4. Schaltung nach Anspruch 3, wobei die Verarbeitungsfunktionen (55) über einen Bus miteinander verbunden sind.

5. Schaltung nach Anspruch 3 oder 4, wobei die Verarbeitungsfunktionen (55) paarweise über dedizierte Verbindungen verbunden sind.

6. Mikrocontroller (1), der eine Schaltung nach einem der Ansprüche 1 bis 5 aufweist.

7. Mikrocontroller nach Anspruch 6, ferner mit einer Schaltung (3) zur Steuerung eines Resets des Mikrocontrollers.

## Claims

1. An electronic circuit comprising:
a plurality of protective nodes (5), each comprising:
at least one processing function (55) for processing information representative of a detection of a disturbance, deriving from at least one detection function (53); and
at least one function (57) for implementing a countermeasure controlled by the processing function in response of a disturbance detection,
**characterized in that** each processing function (55) receives information from all detection functions of the circuit.

2. The circuit according to claim 1, wherein each node (5) comprises at least one function (53) for detecting a disturbance.

3. The circuit according to claim 1 or 2, wherein the processing functions (55) of the various nodes (5) communicate between one another.

4. The circuit according to claim 3, wherein the processing functions (55) are linked between one another via a bus.

5. The circuit according to claim 3 or 4, wherein the processing functions (55) are linked in pairs via dedicated links.

6. A microcontroller (1), comprising a circuit according to anyone of claims 1 to 5.

7. The microcontroller according to claim 6, further comprising a circuit (3) for controlling a reset of the microcontroller.
